# EUROPEAN PATENT APPLICATION

(11) **EP 4 576 317 A1**
(43) Date of publication of application: **25.06.2025**
(21) Application number: 24220978.1
(22) Date of filing: 18.12.2024
(51) Int. Cl.: H01M 10/42, H01M 10/48, H01M 50/211, H01M 50/569, H01M 50/519

(54) **BATTERY PACK**

(30) Priority: 22.12.2023 CN 202311785664; 01.04.2024 CN 202420659358 U
(71) Applicant: AESC Japan Ltd., Kanagawa, 2520012 (JP)
(72) Inventor: BAO, Wenlai, Kangqiao Town, Pudong New Area Shanghai 201315 (CN); YANG, Mingping, Kangqiao Town, Pudong New Area Shanghai 201315 (CN); HE, Yafei, Kangqiao Town, Pudong New Area Shanghai 201315 (CN); CHEN, Chuanlian, Kangqiao Town, Pudong New Area Shanghai 201315 (CN); ZHAO, Nianbin, Kangqiao Town, Pudong New Area Shanghai 201315 (CN); GU, Jianchao, Kangqiao Town, Pudong New Area Shanghai 201315 (CN); WANG, Xinyu, Kangqiao Town, Pudong New Area Shanghai 201315 (CN)
(74) Representative: Becker, Eberhard

(57) **Abstract**

A battery pack includes: a casing, which includes a lower housing (101); a battery cell stack (102), which includes two opposite tab sides and side surfaces adjacent to the tab sides, the battery cell stack (102) is disposed in the lower housing (101); a foaming adhesive (105), which is filled and connected between the tab side of the battery cell stack (102) and the lower housing (101); side plates (104); a flexible circuit board assembly (200), which includes: a flexible printed circuit board (201) and an insulating connecting sheet, the flexible printed circuit board (201) is fixedly connected to the battery cell stack (102) through the insulating connecting sheet; a battery management system (108); a connecting assembly (300), which is communicatively connected between the battery management system (108) and the flexible printed circuit board (201), and the connecting assembly (300) is fixedly connected to the side plates (104).

## Description

### BACKGROUND

### Technical Field

This present disclosure relates to the field of power battery technology, specifically to a battery pack.

### Description of Related Art

The working voltage of a single secondary battery is approximately 2.5V to 4.5V. In electric vehicles or energy storage systems that require high capacity and high voltage output, it is normally required to connect multiple battery cells in series and/or parallel to form a battery module, and then connect the battery modules in series and/or parallel to form a battery pack, which is further utilized as an energy system for powering electric vehicles or as an energy storage system. The number and shape of battery modules used to build the battery pack, as well as the number and shape of battery cells used to compose the battery modules, may be flexibly varied according to actual needs.

In the field of power batteries used in electric vehicles, in order to improve the full-charge driving range and charging speed of electric vehicles, it is necessary to further enhance the energy density and cooling performance of the battery pack. As a solution to improve energy density, the CTP (cell to pack) type battery pack omits the step of forming battery modules from individual battery cells, and directly integrates the individual battery cells into a battery pack, thereby eliminating the structural components and electrical connection components required for forming battery modules, thus allowing for increased space for the battery cells themselves.

At present, common battery cells are categorized into cylindrical battery cells, prismatic battery cells, and pouch battery cells based on their structural differences. CTP (Cell-to-Pack) battery packs using prismatic battery cells have been widely developed and adopted. However, pouch battery cells, due to their disadvantages of poor resistance to external impacts and difficult assembly, still encounter a series of problems in the process of being integrated into CTP battery packs. In existing technology, directly assembling pouch battery cell stacks in battery packs is relatively complicated and has low space utilization rate, which might result in low energy density of the battery pack.

### SUMMARY

Given the drawbacks of the above existing technology, the purpose of this present disclosure is to provide a battery pack, which has a higher space utilization rate, higher energy density, and is more convenient to assemble.

To achieve the above-mentioned purpose and other related purposes, this present disclosure provides a battery pack, including:
A casing, wherein the casing includes a lower housing;
A battery cell stack, wherein the battery cell stack includes multiple pouch battery cells, and includes two opposite tab sides and side surfaces adjacent to the tab sides, the battery cell stack is disposed in the lower housing;
A foaming adhesive, wherein the foaming adhesive is filled and connected between the tab side of the battery cell stack and the lower housing;
Side plates, wherein the side plates are fixed on the side surface of the battery cell stack;
A flexible circuit board assembly, wherein the flexible circuit board assembly includes: a flexible printed circuit board and an insulating connecting sheet, the flexible printed circuit board is fixedly connected to the battery cell stack through the insulating connecting sheet;
A battery management system; and
A connecting assembly, wherein the connecting assembly is communicatively connected between the battery management system and the flexible printed circuit board, and the connecting assembly is fixedly connected to the side plates.

In an embodiment of the disclosure, the flexible printed circuit board includes a flexible printed circuit board body, wherein multiple sampling sheets are disposed on the flexible printed circuit board body and distributed along the stacking direction of the pouch battery cells, and one of the sampling sheets is fixedly welded to a tab of corresponding one of the pouch battery cells.

In an embodiment of the disclosure, the insulating connecting sheet includes: a plastic sheet.

In an embodiment of the disclosure, the flexible printed circuit board body is located at the tab side of the battery cell stack. The plastic sheet includes a first fixing surface and a second fixing surface connected to each other. The second fixing surface is fitted and connected to the flexible printed circuit board body. The first fixing surface is fitted and connected to the upper surface of the battery cell stack to fix the flexible printed circuit board body.

In an embodiment of the disclosure, the first fixing surface is provided with multiple first openings. The first openings are located near the connection between the first fixing surface and the second fixing surface, and corresponds to the sampling sheets.

In an embodiment of the disclosure, the flexible printed circuit board body is adhesively fixed with the plastic sheet, and the plastic sheet is adhesively fixed with the battery cell stack.

In an embodiment of the disclosure, the flexible circuit board assembly further includes a first connector. The two ends of the flexible printed circuit board body are bent in the same direction to form a fixing part that is stuck on the side plates. The first connector is disposed on the fixing part and is electrically connected to the battery management system through the connecting assembly.

In an embodiment of the disclosure, the battery pack further includes: a temperature sampling terminal and a fixing plate, wherein the temperature sampling terminal is fixedly connected to the battery cell stack through the fixing plate.

In an embodiment of the disclosure, the two ends of the fixing plate extend along the stacking direction of the pouch battery cells within the battery cell stack, and are fixedly connected to the corresponding one of the side plates.

In an embodiment of the disclosure, the flexible printed circuit board body is located at the tab side of the battery cell stack, and the temperature sampling terminal is located at the upper surface side of the battery cell stack. The flexible printed circuit board further includes multiple extending structures, and two ends of the extending structures are connected to the flexible printed circuit board body and the temperature sampling terminal respectively.

In an embodiment of the disclosure, a reinforcement plate is disposed at one end of one of the extending structures connected to the temperature sampling terminal, and the reinforcement plate and the temperature sampling terminal are located on opposite sides of the extending structures. The reinforcement plate faces the upper surface of the battery cell stack. The fixing plate is provided with a second opening corresponding to the temperature sampling terminal, and the fixing plate is pressed on the extending structures and/or the reinforcement plate and fits with the upper surface of the battery cell stack.

In an embodiment of the disclosure, the two ends of the fixing plate are bent in the same direction to form a bent structure, and the bent structure is fixedly connected with the side plates.

In an embodiment of the disclosure, the connecting assembly includes: at least one flexible flat cable and an adapter, wherein the at least one flexible flat cable is disposed on the side surface of the battery cell stack and is fixedly connected to the side plates through the adapter.

In an embodiment of the disclosure, the at least one flexible flat cable includes a plurality of flexible flat cables, a quantity of the at least one flexible flat cable is equal to a quantity of the flexible printed circuit boards, and at least a portion of the plurality of flexible flat cables are disposed in a stacking manner and connected and fixed to the side plate through the same adapter.

In an embodiment of the disclosure, two adjacent layers of the flexible flat cables are fixed to each other by a backside adhesive.

In an embodiment of the disclosure, the at least one flexible flat cable is disposed corresponding to the side surface of the battery cell stack. The adapter includes a first connecting surface and a second connecting surface. The first connecting surface is fixedly connected with the side plates, and the second connecting surface is fixedly connected with the at least one flexible flat cable.

In an embodiment of the disclosure, the first connecting surface is overlapped on the side plates and fixed on the side plates through a fastener; the second connecting surface is fixed on the at least one flexible flat cable through the adhesive.

In an embodiment of the disclosure, one end of the at least one flexible flat cable is connected with the corresponding flexible printed circuit board, and the other end of the at least one flexible flat cable extends to the battery management system. The plurality of the flexible flat cables are disposed on same path in a stacking manner.

In an embodiment of the disclosure, the battery pack includes a first battery cell stack and a second battery cell stack, wherein one of the tab sides of the first battery cell stack faces one of the tab sides of the second battery cell stack. The battery management system is located on the other tab side of the first battery cell stack that faces away from the second battery cell stack. One end of the at least one flexible flat cable is connected to the corresponding flexible printed circuit board, and the other end of the at least one flexible flat cable extends across the side surface of the first battery cell stack and/or the side surface of the second battery cell stack and is electrically connected to the same battery management system.

In an embodiment of the disclosure, the battery cell stack is directly fixedly adhered to the base plate of the lower housing through a thermally conductive structural adhesive.

The present disclosure provides a battery pack, which achieves signal transmission by disposing a connecting assembly including at least one flexible flat cable in the battery pack, avoiding the use of a low-voltage wire harness assembly including connectors, wires, terminals, snap fasteners and so on, so it is possible for the battery pack to be smaller in volume and lighter in weight, thereby improving energy density. Multiple layers of the at least one flexible flat cable are overlapped, not occupying extra space in the battery pack, and the at least one of the flexible flat cable is fixed through adapter, which may effectively secure the flexible flat cables and prevent shaking during use, thus improving the space utilization rate and energy density of the battery pack, and making assembling process more convenient.

The present disclosure provides a battery pack, which fixes and limit the position the flexible circuit board assembly by setting a plastic sheet, preventing the flexible printed circuit board from swinging dramatically during use. Compared with using plastic brackets and module upper and lower covers for fixing, the plastic sheet not only plays a role in positioning and fixing the flexible printed circuit board, but also is cheaper, easier to process, lighter in weight, saves material costs, reduce the cost of the battery pack, improve space utilization rate, increase energy density, and simplify the process assembling flow. Moreover, the open fixing sheet may avoid the tab welding fixture.

The disclosure provides a battery pack, which sets up a fixing plate to secure the temperature sampling terminal. When disposing the sensor, the temperature sampling terminal is disposed one by one, and the fixing plate may be disposed directly, so the process flow is simplified. Moreover, the fixing plate may ensure more accurate positioning of the temperature sampling terminal, thereby improving sampling precision. It is also possible to ensure that the temperature sampling terminal will not shift during use.

### BRIEF DESCRIPTION OF THE DRAWINGS

In order to more clearly illustrate the technical solutions of the embodiments of the present disclosure, the drawings required for describing the embodiments will be briefly introduced below. Clearly, the drawings in the following description are only some embodiments of the present disclosure. For those of ordinary skill in the art, other drawings can also be obtained based on these drawings without exerting creative efforts.
FIG. 1 is an exploded view of a battery pack in an embodiment of the present disclosure.
FIG. 2 is a schematic structural view of a flexible circuit board assembly in an embodiment of the present disclosure.
FIG. 3 is an exploded view of the flexible circuit board assembly in an embodiment of the present disclosure.
FIG. 4 is a schematic view of the assembly structure of one side of the flexible circuit board assembly in an embodiment of the present disclosure.
FIG. 5 is a schematic view of the assembly structure of the other side of the flexible circuit board assembly in an embodiment of the present disclosure.
FIG. 6 is a partially enlarged schematic view of a connector on the flexible printed circuit board in FIG. 5 according to an embodiment of the present disclosure.
FIG. 7 is a schematic structural view of a flexible circuit board assembly with a temperature sampling terminal in an embodiment of the present disclosure.
FIG. 8 is an exploded view of a flexible circuit board assembly with a temperature sampling terminal in an embodiment of the present disclosure.
FIG. 9 is a schematic view of the assembly structure of a flexible circuit board assembly with a temperature sampling terminal in an embodiment of the present disclosure.
FIG. 10 is a partially enlarged schematic view of the fixing structure part in FIG. 9 according to an embodiment of the present disclosure.
FIG. 11 is a schematic view of the assembly structure of the temperature sampling terminal in an embodiment of the present disclosure.
FIG. 12 is a schematic structural view of a flexible circuit board assembly in another embodiment of the present disclosure.
FIG. 13 is an exploded view of a flexible circuit board assembly in another embodiment of the present disclosure.
FIG. 14 is a schematic view of the assembly structure of the flexible circuit board assembly in another embodiment of the present disclosure.
FIG. 15 is a top view of a flexible circuit board assembly in another embodiment of the present disclosure.
FIG. 16 is a partially enlarged schematic view of the assembly structure of the temperature sampling terminal in FIG. 15 according to another embodiment of the present disclosure.
FIG. 17 is a schematic structural view of a connecting assembly in an embodiment of the present disclosure.
FIG. 18 is a schematic view of the assembly structure of the connecting assembly in an embodiment of the present disclosure.
FIG. 19 is an exploded view of the connecting assembly in an embodiment of the present disclosure.
FIG. 20 is a top view of the connecting assembly in an embodiment of the present disclosure.
FIG. 21 is a partial enlarged schematic view of the fixation of the adapter in the connecting assembly of FIG. 20 in an embodiment of the present disclosure.

### DESCRIPTION OF THE EMBODIMENTS

The implementation mode of the disclosure is illustrated below through specific examples. Those skilled in the art can easily understand other advantages and effects of the disclosure from the content disclosed in this specification. The disclosure may also be implemented or applied through other different specific implementation modes, and various details in this specification may also be modified or changed based on different views and applications without departing from the spirit of the disclosure.

It should be noted that the illustrations provided in this embodiment are only intended to explain the basic concept of the disclosure in a schematic manner. Therefore, the drawings only show components related to the disclosure rather than being drawn according to the actual number, shape, and size of components during implementation. In actual implementation, the form, quantity, and proportion of each component may be changed freely, and the layout pattern of the components may also be more complex.

In recent years, new energy vehicles have developed rapidly with increasing popularity, which has also accelerated the upgrading of related components and technologies. As an important component of new energy vehicles, more requirements are imposed on the power battery system increasingly for higher product performance, better safety, and lower cost under intense market competition. As a crucial part of new energy vehicles, the battery power system mainly includes a battery pack formed by connecting several individual battery cells in series and parallel, which may provide power source for the normal operation of the vehicle.

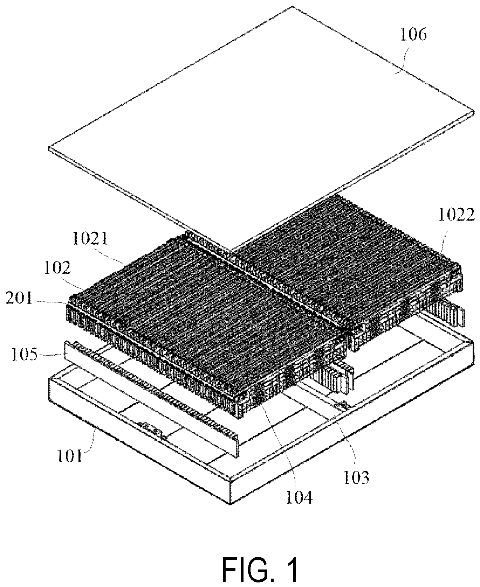

Please refer to FIG. 1. In an embodiment of the present disclosure, the battery pack includes: a casing, a battery cell stack 102, a thermally conductive structural adhesive, a foaming adhesive 105 and a flexible circuit board assembly 200. The casing includes a lower housing 101. The battery cell stack 102 includes multiple pouch battery cells and includes two opposite tab sides and a side surface adjacent to the tab side. The battery cell stack 102 is disposed in the lower housing 101. The battery cell stack 102 and the bottom plate of the lower housing 101 are directly fixedly adhered by a thermally conductive structural adhesive. In other words, the battery cell stack 102 and the bottom plate of the lower housing 101 are directly fixedly adhered by a thermally conductive structural adhesive. The foaming adhesive 105 is filled and connected between the tab side of the battery cell stack 102 and the lower housing 101, and the foaming adhesive 105 is formed by foaming, expanding and curing polyurethane and other materials. The flexible circuit board assembly 200 includes: a flexible printed circuit board 201 and an insulating connecting sheet. The flexible printed circuit board 201 is fixedly connected to the battery cell stack 102 through the insulating connecting sheet, wherein the thickness of and space occupied by the insulating connecting sheet are smaller than the conventional bracket used to connect and fix the flexible printed circuit board 201. That is, the battery pack includes a lower housing 101 and a battery cell stack 102 disposed in the lower housing 101. The battery cell stack 102 is sequentially disposed in the lower housing 101. A cavity may be formed between the lower housing 101 and the upper cover 106 on the top of the battery cell stack 102 to provide a closed receiving space for the battery cell stack 102. Each battery cell stack 102 includes multiple pouch battery cells, and the multiple pouch battery cells are sequentially stacked in the thickness direction of the battery cell to form the battery cell stack 102. When manufacturing the battery pack, the number of battery cell stacks 102 in each battery pack may be disposed according to user needs. The higher the power supply capacity requirement that is imposed on the battery pack, the corresponding larger number of battery cell stacks 102 needs to be provided in the lower housing 101.

Please refer to FIG. 1. In an embodiment of the present disclosure, two battery cell stacks 102 are disposed in the lower housing 101, namely a first battery cell stack 1021 and a second battery cell stack 1022. One of the tab sides of the first battery cell stack 1021 faces one of the tab sides of the second battery cell stack 1022. The two battery cell stacks 102 are separated by a beam 103 in the middle of the casing. The foaming adhesive 105 is disposed on two sides of the battery cell stack 102 and is located between the battery cell stack 102 and the lower housing 101. Specifically, the foaming adhesive 105 may be disposed between one side of the battery cell stack 102 where the tab is disposed and the edge beam of the lower housing 101 and between one side of the battery cell stack 102 where the tab is disposed and the beam 103 in the middle of the casing. The battery cell stack 102 and the bottom plate of the lower housing 101 are directly fixedly adhered through the thermally conductive structural adhesive. One of the side plates 104 is also disposed in the lower housing 101 and on the two sides of the battery cell stack 102. That is to say, the side plates 104 are located on the side surface of the battery cell stack 102, and the side surface is adjacent to the tab side of the battery cell stack 102. In other words, the side plates 104 are disposed on the two sides of the battery cell stack 102 along the stacking direction of the pouch battery cells therein. In other words, the side plates 104 are located on the side surface of the battery cell stack 102 perpendicular to the beam 103 in the middle of the casing. The side plates 104 may be clamped tight by a tooling clamp to compress the battery cell stack 102 to a predetermined size and then placed into the lower housing 101.

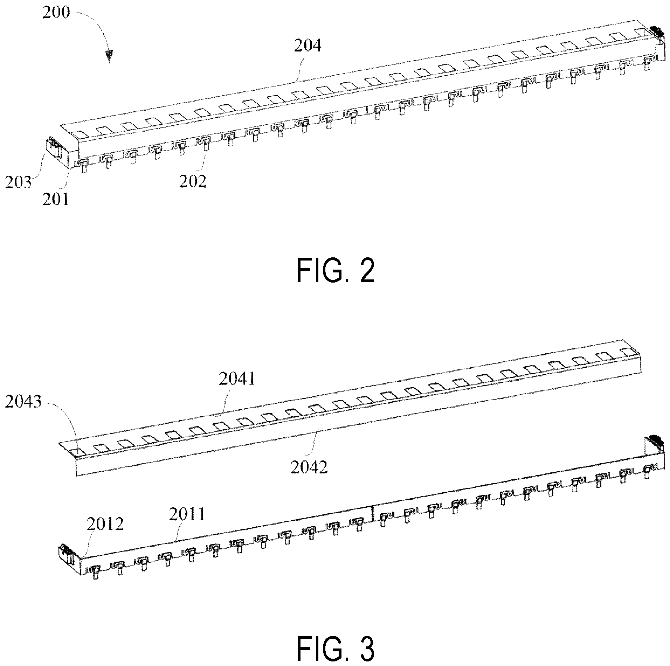

Please refer to FIG. 1 and FIG. 2. In an embodiment of the present disclosure, a flexible printed circuit board assembly 200 is also disposed in the battery pack. The flexible circuit board assembly 200 includes a flexible printed circuit board 201, sampling sheets 202, a first connector 203 and an insulating connecting sheet. In this embodiment, the insulating connecting sheet is a plastic sheet 204, and the flexible printed circuit board 201 is fixedly connected to the battery cell stack 102 through the insulating connecting sheet. Specifically, the plastic sheet 204 may be made of polyethylene glycol terephthalate (PET) or polycarbonate (PC) and other materials. A flexible printed circuit board 201 is disposed on each of the two tab sides of each battery cell stack 102, monitoring the voltage, temperature, current output and other information of the battery cell stack 102 in real time.

Please refer to FIG. 2, FIG. 3 and FIG. 4. In an embodiment of the present disclosure, the flexible printed circuit board 201 is in the form of a bendable sheet. The flexible printed circuit board 201 includes a flexible printed circuit board body 2011. The flexible printed circuit board body 2011 may be located on the tab side of the battery cell stack 102, and the flexible printed circuit board body 2011 is attached to the tab side of the battery cell stack 102. In the disclosure, the two ends of the flexible printed circuit board body 2011 are bent in the same direction, and fixing parts 2012 are formed at two ends of the flexible printed circuit board body 2011. The fixing part 2012 may be stuck on the side plates 104. When the flexible printed circuit board 201 is assembled on the battery cell stack 102, the flexible printed circuit board body 2011 is adhered to the tab side of the battery cell stack 102 close to the foaming adhesive 105. The fixing parts 2012 at the two ends of the flexible printed circuit board body 2011 correspond to the side surface of the battery cell stack 102 close to the side plates 104.

Please refer to FIG. 2. In an embodiment of the present disclosure, the insulating connecting sheet includes: a plastic sheet 204. Multiple sampling sheets 202 are disposed on each flexible printed circuit board 201. The multiple sampling sheets 202 are distributed along the stacking direction of the pouch battery cells, and multiple sampling sheets 202 are welded side by side on the flexible printed circuit board 201. Multiple sampling sheets 202 are located on one side of the flexible printed circuit board body 2011, and the other side of the flexible printed circuit board body 2011 is adhered to the plastic sheet 204. That is to say, the flexible printed circuit board body 2011 and the plastic sheet 204 are fixedly adhered, and the plastic sheet 204 is then fixedly adhered to the battery cell stack 102. The number of sampling sheets 202 is the same as the number of pouch battery cells in each battery cell stack 102. When the flexible printed circuit board 201 is assembled on the tab side of the battery cell stack 102, the sampling sheets 202 are welded and fixed correspondingly to the tab on the pouch battery cells. The sampling sheets 202 may be made of metal, such as a nickel sheet.

Please refer to FIG. 2, FIG. 5 and FIG. 6. In an embodiment of the present disclosure, a first connector 203 is further disposed on the fixing part 2012 of the flexible printed circuit board 201. The flexible printed circuit board 201 is electrically connected to the battery management system 108 through the first connector 203 and the connecting assembly. In this way, it is possible to monitor pouch battery cells. When the flexible printed circuit board 201 is assembled on the tab side of the battery cell stack 102, the fixing part 2012 of the flexible printed circuit board 201 is stuck on the snap fastener 107 of the side plates 104. Under the circumstances, the first connector 203 on the fixing part 2012 is engaged with the snap fastener 107 on the side plates 104, which may limit the position of the flexible printed circuit board 201.

Please refer to FIG. 2 and FIG. 3. In an embodiment of the present disclosure, the plastic sheet 204 includes a first fixing surface 2041 and a second fixing surface 2042. The first fixing surface 2041 and the second fixing surface 2042 are connected together, and the first fixing surface 2041 and the second fixing surface 2042 are disposed at a preset angle. The plastic sheet 204 may be made of plastic, and the first fixing surface 2041 and the second fixing surface 2042 are integrally formed. The angle between the first fixing surface 2041 and the second fixing surface 2042 is equal to the angle formed between the upper surface of the battery cell stack 102 and the surface on the tab side. It is possible to ensure that the first fixing surface 2041 is closely connected to the upper surface of the battery cell stack 102 during assembling, and the second fixing surface 2042 is closely connected to the flexible printed circuit board body 2011 assembled on the tab side of the battery cell stack 102 to fix the flexible printed circuit board body 2011. In this embodiment, the first fixing surface 2041 and the second fixing surface 2042 are arranged at a right angle, for example. In the disclosure, the upper surface of the battery cell stack 102 is a side surface of the battery cell stack 102 facing the upper cover 106.

Please refer to FIG. 2 and FIG. 3. In an embodiment of the present disclosure, multiple first openings 2043 are also disposed on the first fixing surface 2041 of the plastic sheet 204. The multiple first openings 2043 are arranged side by side on the first fixing surface 2041, and the first openings 2043 are close to the connection between the first fixing surface 2041 and the second fixing surface 2042. The number of the first openings 2043 is equal to the number of the sampling sheets 202, and the first openings 2043 are arranged corresponding to the sampling sheets 202. When the sampling sheets 202 is welded to the tab, the tool may enter through the first openings 2043. This disclosure provides no limitation to the shape and size of the first openings 2043, as long as the first openings 2043 may be used to prevent tooling from entering during welding. The first openings 2043 may be disposed in a rectangular, circular, oval or other arbitrary shape.

Please refer to FIG. 3. In an embodiment of the present disclosure, an adhesive (not shown) is further disposed on the first fixing surface 2041 and the second fixing surface 2042, and located inside the bends of the first fixing surface 2041 and the second fixing surface 2042. The adhesive is double-sided adhesive, and the first fixing surface 2041 of the plastic sheet 204 is fixedly adhered to the upper surface of the battery cell stack 102, and the second fixing surface 2042 of the plastic sheet 204 is fixedly adhered to the flexible printed circuit board 201.

Please refer to FIG. 2 to FIG. 6. In an embodiment of the present disclosure, when assembling the flexible circuit board assembly 200, multiple sampling sheets 202 are welded on one side of the flexible printed circuit board 201, and the first connector 203 is assembled on the fixing part 2012 of the flexible printed circuit board 201. Moreover, the second fixing surface 2042 of the plastic sheet 204 and the flexible printed circuit board body 2011 are fixed through the adhesive. After the flexible circuit board assembly 200 is assembled, the flexible circuit board assembly 200 is assembled on the battery cell stack 102. Specifically, first, the first fixing surface 2041 of the plastic sheet 204 and the upper surface of the battery cell stack 102 are fixed through the adhesive. Thereafter, the sampling sheets 202 are welded to the tab of each of the pouch battery cells on the battery cell stack 102 through the first openings 2043. Finally, the fixing part 2012 of the flexible printed circuit board 201 is clamped through the opening on the side plates, and the first connector 203 on the fixing part 2012 is engaged with the snap fastener 107 on the side plates.

Please refer to FIG. 3, FIG. 7 to FIG. 11. In an embodiment of the present disclosure, the battery pack further includes: a temperature sampling terminal 205 and a fixing plate 207. The temperature sampling terminal 205 is fixedly connected to the battery cell stack 102 through the fixing plate 207. In order to collect the temperature of each of the pouch battery cells, a temperature sampling terminal 205 is further disposed in the battery pack. The flexible printed circuit board body 2011 is located on the tab side of the battery cell stack 102, and the temperature sampling terminal 205 is located on the upper surface side of the battery cell stack 102. The temperature sampling terminal 205 is electrically connected to the flexible printed circuit board 201. In the disclosure, the flexible printed circuit board 201 further includes multiple extending structures 2013. The multiple extending structures 2013 are connected to the flexible printed circuit board body 2011. That is to say, the two ends of the extending structures 2013 are respectively connected to the flexible printed circuit board body 2011 and the temperature sampling terminal 205. The position of the extending structures 2013 may be defined according to the collection requirements and the overall structure of the battery pack. In this embodiment, multiple extending structures 2013 are arranged side by side on the plane where the first fixing surface 2041 of the plastic sheet 204 is located or on the upper surface of the battery cell stack 102, and one end of one of the extending structures 2013 is connected to the flexible printed circuit board body 2011, the other end thereof is connected to the temperature sampling terminal 205. In addition, a reinforcement plate 206, a temperature sampling terminal 205 and a fixing plate 207 are further disposed in the flexible circuit board assembly 200. The fixing plate 207 may be pressed on the extending structures 2013 and/or the reinforcement plate 206 and adhered to the upper surface of the battery cell stack 102.

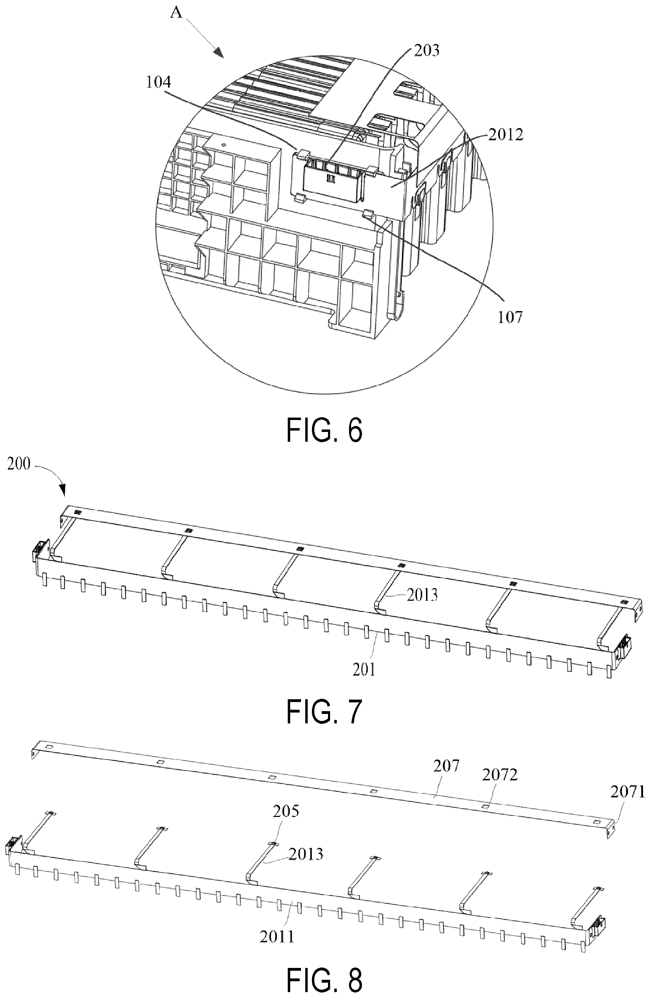

Please refer to FIG. 7 to FIG. 9. In an embodiment of the present disclosure, the temperature sampling terminal 205 is connected to the flexible printed circuit board 201 and is located at the other end of the extending structures 2013. The temperature sampling terminal 205 is in contact with the pouch battery cells in the battery cell stack 102, collects the temperature of the pouch battery cells, and transmits the temperature information to the battery management system 108 through the flexible printed circuit board 201 to monitor the temperature of the pouch battery cells and ensure safe operation of the system.

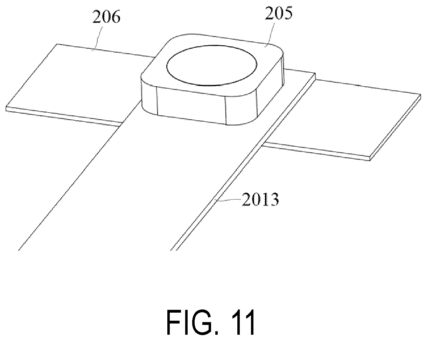

Please refer to FIG. 8 and FIG. 11. In an embodiment of the present disclosure, a reinforcement plate 206 is disposed on the extending structures 2013 of the flexible printed circuit board 201. The reinforcement plate 206 is disposed at one end of one of the extending structures 2013 connected to the temperature sampling terminal 205. The reinforcement plate 206 and the temperature sampling terminal 205 are located on two sides of the extending structures 2013, and the reinforcement plate 206 is close to the pouch battery cells. That is to say, the reinforcement plate 206 and the temperature sampling terminal 205 are located on opposite sides of the extending structures 2013, and the reinforcement plate 206 faces the upper surface of the battery cell stack 102. The temperature sampling terminal 205 extends from two ends of the reinforcement plate 206 to facilitate connection with the fixing plate 207.

Please refer to FIG. 8, FIG. 9 and FIG. 10. In an embodiment of the present disclosure, the fixing plate 207 is disposed on the upper surface of the battery cell stack 102 and is placed along the thickness direction of the pouch battery cells. The fixing plate 207 is fixedly connected to the reinforcement plate 206 on one side of each temperature sampling terminal 205, thereby fixing the multiple temperature sampling terminals 205 on the fixing plate 207. The two ends of the fixing plate 207 are bent toward the same side to form a bent structure 2071. When the fixing plate 207 is assembled on the upper surface of the battery cell stack 102, the bent structure 2071 corresponds to two side surfaces of the battery cell stack 102. A through hole is disposed on the bent structure 2071, and the fixing structure 208 may be used to fixedly connect the fixing plate 207 to the side plates on the two sides of the battery cell stack 102 to fix the multiple temperature sampling terminals 205. That is to say, the two ends of the fixing plate 207 extend along the stacking direction of the pouch battery cells in the battery cell stack 102 and are fixedly connected to the corresponding side plates 104. Specifically, the bent structure 2071 is fixedly connected to the side plates 104. The fixing structure 208 is, for example, a rivet or other fixing structure.

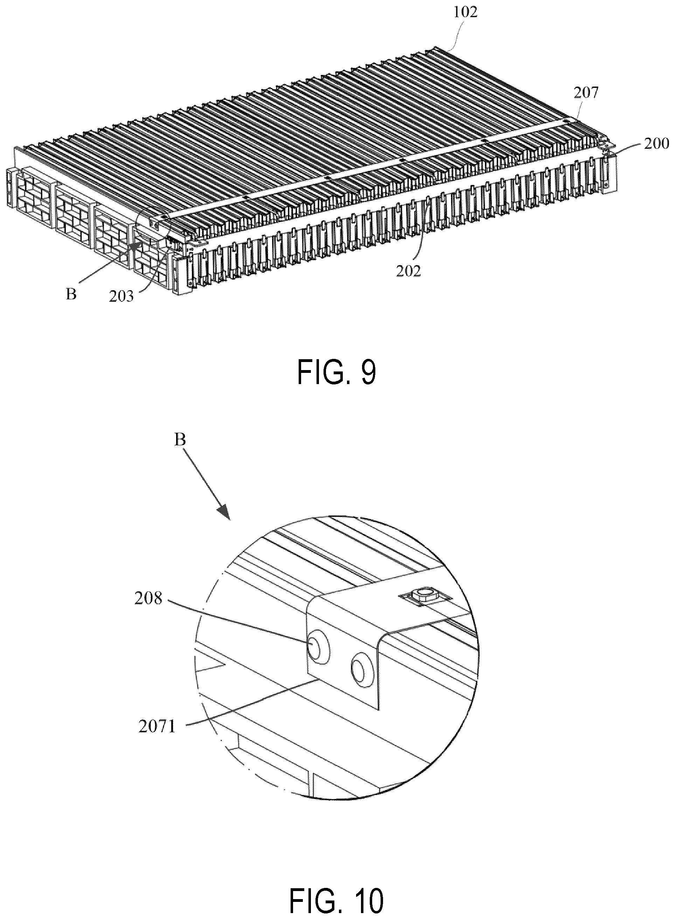

Referring to FIG. 8 and FIG. 9, in an embodiment of the present disclosure, multiple second openings 2072 are disposed on the fixing plate 207. The number of the second openings 2072 is the same as the number of the temperature sampling terminals 205. The position of the second openings 2072 corresponds to the position of the temperature sampling terminals 205. When the fixing plate 207 is placed on the upper surface of the battery cell stack 102, the temperature sampling terminals 205 pass through the second openings 2072 to the surface of the fixing plate 207.

Please refer to FIG. 8 to FIG. 11. In an embodiment of the present disclosure, an adhesive (not shown) is disposed on the fixing plate 207. On the one hand, the adhesive on the fixing plate 207 may be fixedly connected to the two sides of the reinforcement plate 206. That is to say, the fixing plate 207 may be pressed on the reinforcement plate 206 to fix the temperature sampling terminal 205 on the battery cell stack 102, and the temperature sampling terminal 205 passes through the second opening 2072 on the fixing plate 207 to the surface of the fixing plate 207. On the other hand, after the fixing plate 207 is fixedly connected to the temperature sampling terminal 205, the fixing plate 207 may be fixedly connected to the pouch battery cells through the adhesive on the fixing plate 207. That is to say, the fixing plate 207 may be adhered to the upper surface of the battery cell stack 102.

Please refer to FIG. 7 to FIG. 11. In an embodiment of the present disclosure, when assembling the flexible circuit board assembly 200, after the sampling sheets 202 and the first connector 203 are assembled with the flexible printed circuit board 201, the reinforcement plate 206 and the temperature sampling terminal 205 on the reinforcement plate 206 are assembled on the flexible printed circuit board 201. After that, the fixing plate 207 and the reinforcement plate 206 are fixedly connected through the adhesive, and finally the flexible circuit board assembly 200 is assembled on the battery cell stack 102. The fixing plate 207 and the battery cell stack 102 may be fixed with the adhesive, and the sampling sheets 202 may be welded to the tab of each of the pouch battery cells on the battery cell stack 102. Finally, the fixing part 2012 of the flexible printed circuit board 201 is clamped through the opening on the side plates 104, and the first connector 203 on the fixing part 2012 is engaged with the snap fastener 107 on the side plates.

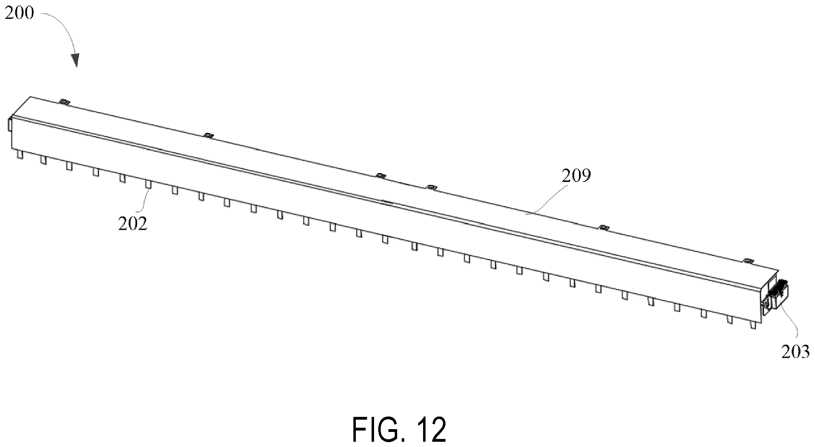

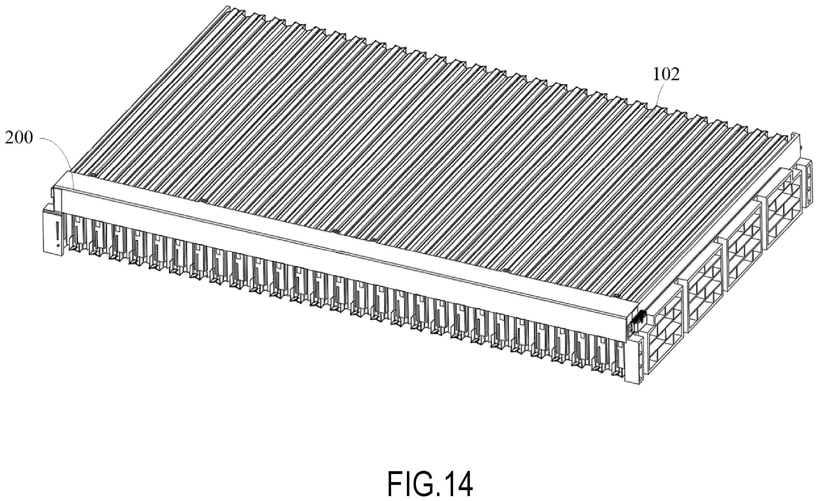

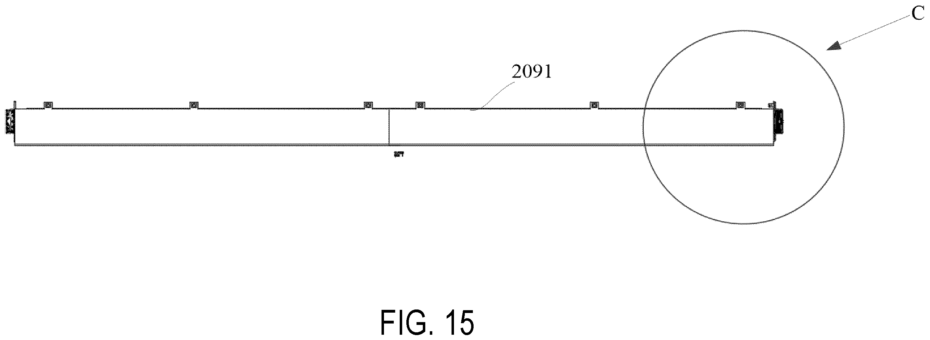

Referring to FIG. 12 to FIG. 16, in another embodiment of the present disclosure, another flexible circuit board assembly 200 is provided. The insulating connecting sheet includes: a hot pressing film 209. The sampling sheets 202 are fixed on the flexible printed circuit board 201. The hot pressing film 209 includes a first hot pressing film 2091 and a second hot pressing film 2092. At least a part of the flexible printed circuit board 201 and at least a part of the sampling sheets 202 are pressed between the first hot pressing film 2091 and the second hot pressing film 2092. The first hot pressing film 2091 and the second hot pressing film 2092 insulatingly fix the flexible printed circuit board 201 and the sampling sheets 202.

Please refer to FIG. 12 to FIG. 14. In another embodiment of the present disclosure, the flexible printed circuit board body 2011 is adhered to the upper surface of the battery cell stack 102. The two ends of the flexible printed circuit board body 2011 are bent in the same direction, and fixing parts 2012 are formed at the two ends of the flexible printed circuit board body 2011. When the flexible circuit board 201 is assembled on the battery cell stack 102, the flexible printed circuit board body 2011 is adhered to the upper surface of the battery cell stack 102, and the fixing parts 2012 at the two ends of the flexible printed circuit board body 2011 correspond to the side surface of the battery cell stack 102.

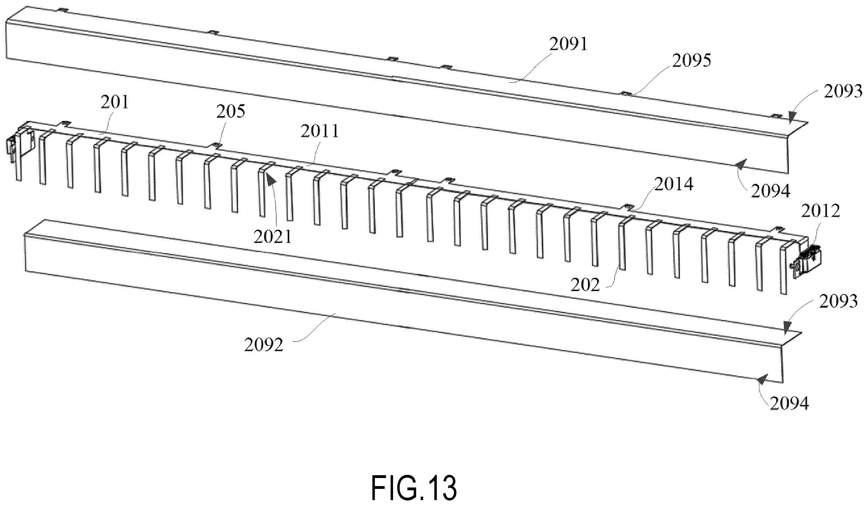

Please refer to FIG. 12 and FIG. 13. In another embodiment of the present disclosure, a first connector 203 is further disposed on the fixed part 2012 of the flexible printed circuit board 201. The flexible printed circuit board 201 is electrically connected to the battery management system 108 through the first connector 203 and the connecting assembly 300. In this way, it is possible to monitor the pouch battery cells. With reference to FIG. 6, when the flexible printed circuit board 201 is assembled on the upper surface of the battery cell stack 102, the fixing part 2012 of the flexible printed circuit board 201 is stuck on the snap fastener 107 of the side plates 104. Under the circumstances, the first connector 203 on the fixing part 2012 is engaged with the snap fastener 107 on the side plates, so that the position of the flexible printed circuit board 201 may be defined.

Please refer to FIG. 12 to FIG. 14. In another embodiment of the present disclosure, multiple sampling sheets 202 are disposed on each flexible printed circuit board 201, and the multiple sampling sheets 202 are welded side by side on the flexible printed circuit board body 2011. The multiple sampling sheets 202 are located on one side of the flexible printed circuit board body 2011. In this embodiment, the flexible printed circuit board body 2011 is located on the upper surface side of the battery cell stack 102. One end of each of the sampling sheets 202 is fixedly connected to the flexible printed circuit board body 2011, and the other end thereof is bent in the same direction to form a vertical part 2021. When the flexible printed circuit board body 2011 is insulatingly adhered to the upper surface of the battery cell stack 102 through the hot pressing film 209, a part of each of the sampling sheets 202 is insulatingly adhered to the upper surface of the battery cell stack 102 through the hot pressing film 209, and the other part thereof is insulatingly adhered to the tab side of the battery cell stack 102 through the hot pressing film 209. The other end of one of the sampling sheets 202 is bent and extended to the position where the tab of the pouch battery cells is located. That is to say, the vertical part 2021 extends to the tab side of the battery cell stack 102, and a part of the vertical part 2021 extends beyond the first hot pressing film 2091 and the second hot pressing film 2092 and fixedly welded on the tab of the corresponding one of the pouch battery cells. The number of sampling sheets 202 is the same as the number of pouch battery cells in each battery cell stack 102. When the flexible printed circuit board 201 is assembled on the upper surface of the battery cell stack 102, the other end of one of the sampling sheets 202 corresponds to the tab on the pouch battery cells. The sampling sheets 202 are made of metal, such as a nickel sheet.

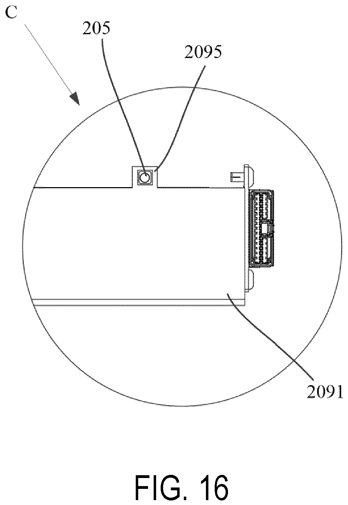

Referring to FIG. 13 and FIG. 16, in another embodiment of the present disclosure, multiple first protrusions 2014 are disposed on each flexible printed circuit board 201. The first protrusions 2014 and the sampling sheets 202 are located on opposite sides of the flexible printed circuit board body 2011. The temperature sampling terminal 205 is disposed on the first protrusions 2014. By disposing the temperature sampling terminal 205 on the first protrusions 2014, it is possible to detect the temperature of the pouch battery cells. The number of first protrusions 2014 is the same as the number of temperature sampling terminals 205, and the position of the first protrusions 2014 is set corresponding to the position of the temperature sampling terminal 205, that is, the temperature sampling terminal 205 is disposed on the upper surface of the battery cell stack 102. When the temperature sampling terminal 205 is disposed on the first protrusions 2014, the temperature of the pouch battery cells to be sampled may be sampled.

Please refer to FIG. 13 and FIG. 16. In another embodiment of the present disclosure, the shapes of the first hot pressing film 2091 and the second hot pressing film 2092 are adapted to the shapes of the flexible printed circuit board 201 and the sampling sheets 202. In this embodiment, the first hot pressing film 2091 is disposed on the vertical part 2021 of the sampling sheets 202 and the outside of the flexible circuit board body 2011, and the second hot pressing film 2092 is disposed on the vertical part 2021 of the sampling sheets 202 and the inside of the flexible printed circuit board body 2011. The first hot pressing film 2091 and the second hot pressing film 2092 include a first hot pressing surface 2093 and a second hot pressing surface 2094. The first hot pressing surface 2093 and the second hot pressing surface 2094 are disposed at a preset angle, and the angle formed between the first hot pressing surface 2093 and the second hot pressing surface 2094 is equal to the angle of the vertical part 2021 on the sampling sheets 202 and the angle between the upper surface of the battery cell stack 102 and the surface on the tab side. When the first hot pressing film 2091 and the second hot pressing film 2092 are pressed against the flexible printed circuit board 201 and the sampling sheets 202, the edge of the first hot pressing surface 2093 coincides with the edge of the flexible printed circuit board body 2011, and the edge of the second hot pressing surface 2094 exposes the other end of the sampling sheets 202. In order to protect the temperature sampling terminal 205, multiple second protrusions 2095 are disposed on the first hot pressing film 2091. The second protrusions 2095 on the first hot pressing film 2091 correspond to the first protrusions 2014 on the flexible printed circuit board 201. When the first hot pressing film 2091 is attached to the flexible circuit board 201, the second protrusions 2095 on the first hot pressing film 2091 are attached to the first protrusions 2014 on the flexible printed circuit board 201, that is to say, the first protrusions 2014 are pressed against the second protrusions 2095 so that the temperature sampling terminal 205 is able to be disposed on the upper surface of the battery cell stack 102 to perform temperature sampling on the pouch battery cells that need to be sampled. Moreover, the second protrusions 2095 are provided with multiple through holes, and the through holes expose the temperature sampling terminal 205 disposed on the first protrusions 2014.

Please refer to FIG. 12 to FIG. 16. In another embodiment of the present disclosure, when assembling the flexible circuit board assembly 200, multiple sampling sheets 202 are welded on one side of the flexible printed circuit board 201, and the first connector 203 is assembled on the fixing part 2012 of the flexible printed circuit board 201. Then the first hot pressing film 2091 and the second hot pressing film 2092 are pressed against the flexible printed circuit board 201 and the sampling sheets 202. The sampling sheets 202 are bent to form the vertical part 2021 on each of the sampling sheets 202. The hot pressing film 209 is fixed on the upper surface of the battery cell stack 102 through the adhesive. The other end of one of the sampling sheets 202 exposed by the hot pressing film 209 is welded on the tab of each of the pouch battery cells on the battery cell stack 102. Finally, the fixing part 2012 of the flexible printed circuit board 201 is clamped through the opening on the side plates, and the first connector 203 on the fixing part 2012 is engaged with the snap fastener 107 on the side plates. In this embodiment, the positions of the flexible printed circuit board 201 and the sampling sheets 202 are defined through the hot pressing film 209, thereby making it possible to eliminate the plastic bracket and the upper and lower module covers in the conventional battery pack and significantly reduce the cost. In the meantime, it is possible to fix and insulate the flexible printed circuit board 201 and the sampling sheets 202. During assembling, it is possible to simplify the assembling process, and the position of the temperature sampling terminal 205 is defined by the hot pressing film 209, thus ensuring the accuracy of the position and there is no need for assembly personnel to perform alignment.

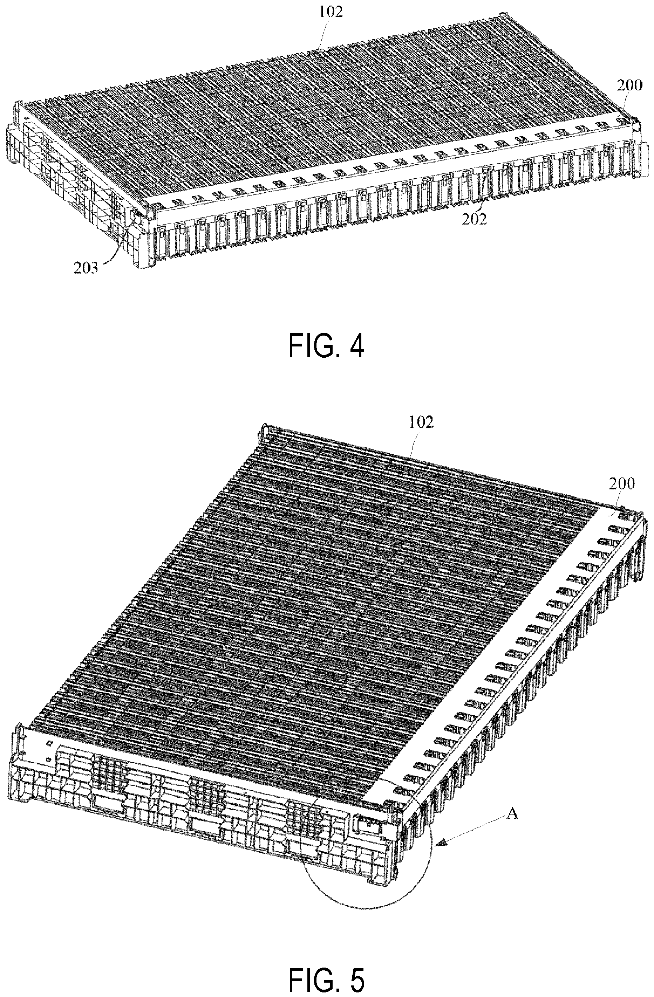

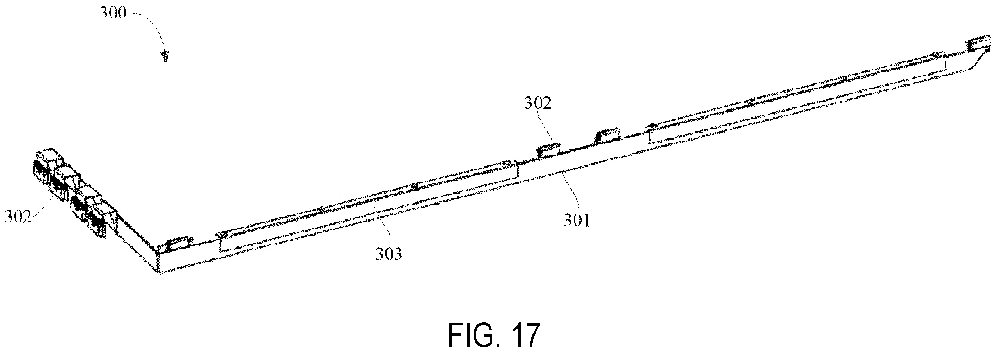

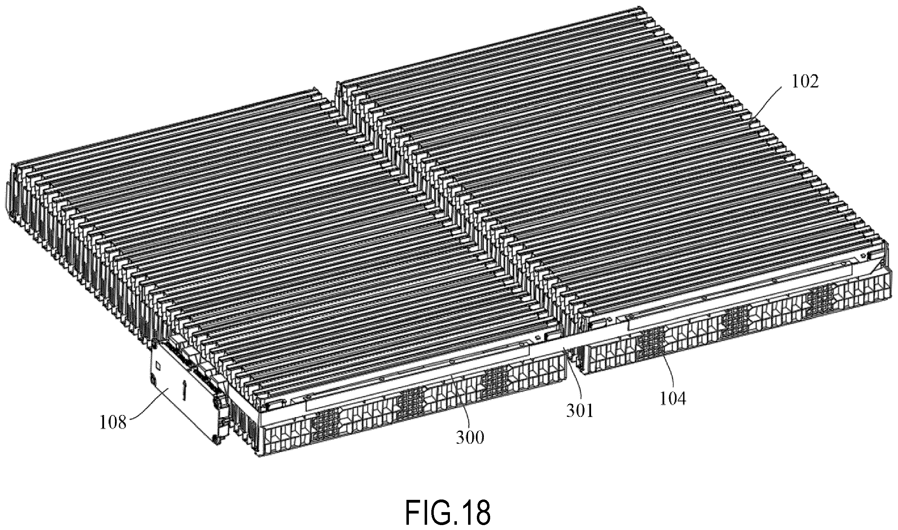

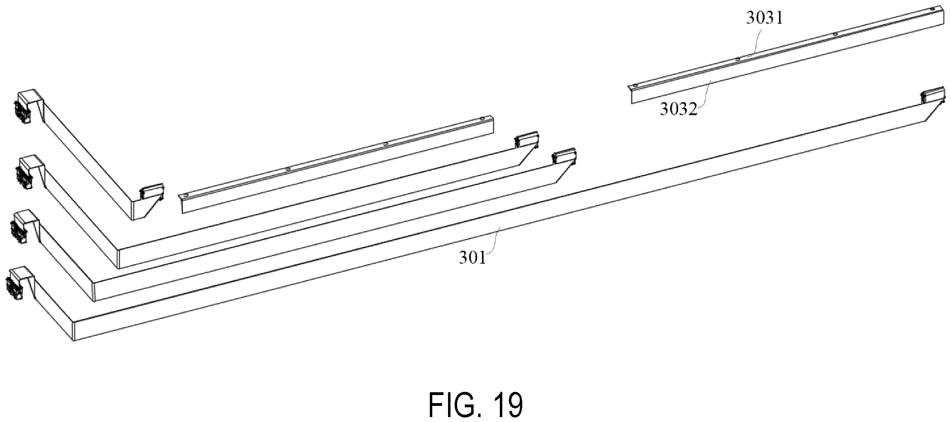

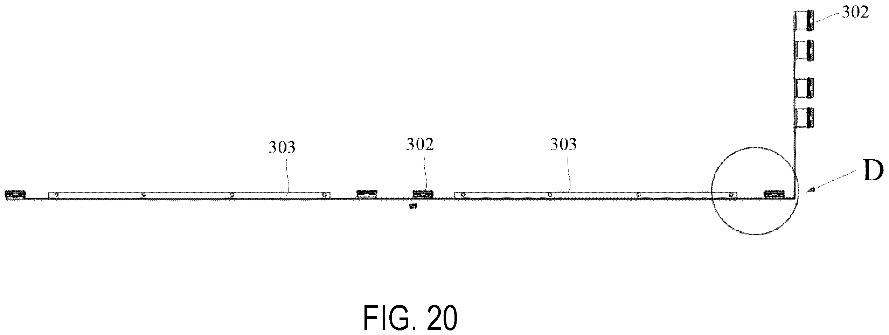

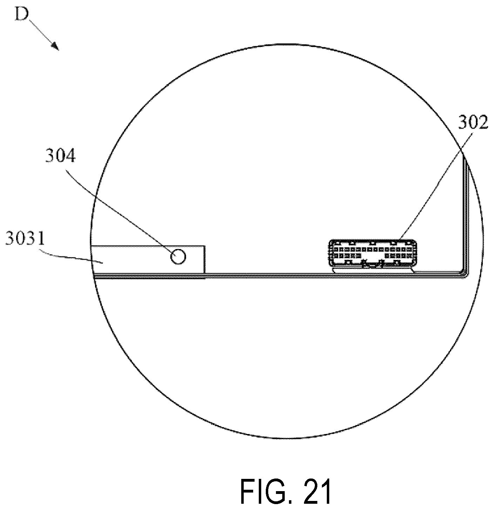

Please refer to FIG. 17 to FIG. 21, and as shown in FIG. 1 and FIG. 4, in an embodiment of the present disclosure, the battery pack further includes: a connecting assembly 300, a battery management system 108 and side plates 104. The flexible printed circuit board 201 is communicatively connected to the battery management system 108 through the connecting assembly 300, the side plates 104 are fixed on the side surface of the battery cell stack 102, and the connecting assembly 300 is fixedly connected to the side plates 104. The connecting assembly 300 includes: at least one flexible flat cable 301 and an adapter 303, which is a thin sheet structure with a fixed connection function. The at least one flexible flat cable 301 is disposed on the side surface of the battery cell stack 102 and is fixedly connected to the side plates 104 through the adapter 303. That is to say, the at least one flexible flat cable 301 is disposed corresponding to the side surface of the battery cell stack 102. A connecting assembly 300 is further provided. One end of the connecting assembly 300 is electrically connected to the first connector 203 of the flexible printed circuit board 201, and the other end thereof is connected to the battery management system 108 to realize signal transmission. The connecting assembly 300 includes at least one flexible flat cable 301, a second connector 302 and an adapter 303. The at least one flexible flat cable 301 is fixed on the side plates 104 through the adapter 303.

Please refer to FIG. 4, FIG. 17 and FIG. 18. In an embodiment of the present disclosure, the two ends of the at least one flexible flat cable 301 are connected to the second connector 302, that is, the two ends of the at least one flexible flat cable 301 are both connected to the second connector 302. The second connector 302 at one end of the at least one flexible flat cable 301 is connected to the first connector 203 on the flexible printed circuit board 201, and the second connector 302 at the other end of the at least one flexible flat cable 301 is electrically connected to the battery management system 108. In the disclosure, the number of the at least one flexible flat cable 301 may be multiple, and the number of the at least one flexible flat cable 301 is equal to the number of flexible printed circuit boards 201. The battery pack includes a first battery cell stack and a second battery cell stack. One of the tab sides of the battery cell stack faces one of the tab sides of the second battery cell stack. The battery management system 108 is located on the other tab side of the first battery cell stack facing away from the second battery cell stack. One end of the at least one flexible flat cable 301 is connected to the corresponding flexible printed circuit board 201 respectively, and the other end of the at least one of flexible flat cable 301 extends across the side surface of the first battery cell stack and/or the side surface of the second battery cell stack and is electrically connected to the same battery management system 108. In this embodiment, if it is necessary to transmit signals from four flexible printed circuit boards 201 in each battery pack, then four flexible flat cables 301 are provided, for example. The length and folding method of each flexible flat cable 301 may be folded as required. The second connectors 302 on the flexible flat cables 301 are staggered in the extending direction of the flexible flat cables 301. In the embodiment, the at least one flexible flat cable 301 is disposed corresponding to the side surface of the battery cell stack 102, and extends along the side surface of the battery cell stack 102 from the first connector 203 on the flexible printed circuit board 201 to the battery management system 108. That is, one end of the at least one flexible flat cable 301 is connected to the first connector 203 on the corresponding flexible printed circuit board 201, and the other end of the at least one flexible flat cable 301 is extensively connected to the battery management system 108. Moreover, on the repeated path, multiple flexible flat cables 301 are disposed in an overlapped manner, that is to say, at least part of the at least one flexible flat cable 301 are disposed in a stack, and are fixedly connected to the side plates 104 through the same adapter 303. Specifically, multiple flexible flat cables 301 are stacked on the same path.

Please refer to FIG. 17, FIG. 19, FIG. 20 and FIG. 21. In an embodiment of the present disclosure, the adapter 303 includes a first connecting surface 3031 and a second connecting surface 3032, and the first connecting surface 3031 and the second connecting surface 3032 are set at a preset angle. During assembling, the first connecting surface 3031 is overlapped on the side plates 104 and is fixed through the fastener 304. That is to say, the first connecting surface 3031 may be fixedly connected to the side plates 104; the second connecting surface 3032 is fixedly connected to the at least one flexible flat cable 301 through the adhesive. That is to say, the second connecting surface 3032 may be fixedly connected to the at least one flexible flat cable 301. In this embodiment, the first connecting surface 3031 and the second connecting surface 3032 are disposed at a right angle, for example. The fastener 304 may be, for example, a rivet or other fasteners.

Please refer to FIG. 1, FIG. 17 to FIG. 21. In an embodiment of the present disclosure, when assembling the connecting assembly 300, the second connectors 302 at the two ends of each flexible flat cable may be connected to the corresponding first connector 203 and the battery management system 108 first. Next, the multi-layer flexible flat cables 301 are overlapped, and the adjacent flexible flat cables 301 are fixed with the adhesive. That is to say, two adjacent layers of flexible flat cables 301 may be fixed to each other with the adhesive, so that the multi-layer flexible flat cable 301 is formed as a whole. Finally, the adapter 303 is assembled, the second connecting surface 3032 of the adapter 303 is fixed on the at least one flexible flat cable 301 through the adhesive, then the first connecting surface 3031 of the adapter 303 is overlapped on the side plates, and the fastener 304 and the like is adopted to secure the first connecting surface 3031 and the side plates 104.

In summary, the disclosure provides a battery pack, including a lower housing 101, a battery cell stack 102 disposed in the lower housing 101, flexible printed circuit boards 201 disposed on two sides of each battery cell stack 102, a connecting assembly 300 including at least one flexible flat cable 301, a plastic sheet 204 or a hot pressing film 209 that fixes the flexible printed circuit board 201, and a fixing plate 207 that fixes the temperature sampling terminal 205. The battery pack provided by the disclosure does not require a separate bracket structure for the flexible printed circuit board 201 and the like, thereby making it possible to improve the volume utilization and energy density of the battery pack.

The above description is only a preferred embodiment of the present disclosure and an explanation of the technical principles adopted. Those skilled in the art should understand that the scope involved in the present disclosure is not limited to technical solutions formed by a specific combination of the above technical features. In the meantime, the disclosure should also cover other technical solutions formed by any combination of the above technical features or their equivalent features without departing from the concept of the disclosure, for example, a technical solution formed by replacing the above features with technical features disclosed in the disclosure (but not limited to) with similar functions.

## Claims

1. A battery pack, comprising:
a casing, wherein the casing comprises a lower housing (101);
a battery cell stack (102), wherein the battery cell stack (102) comprises a plurality of pouch battery cells, and comprises two opposite tab sides and side surfaces adjacent to the tab sides, the battery cell stack (102) is disposed in the lower housing (101);
a foaming adhesive (105), wherein the foaming adhesive (105) is filled and connected between the tab side of the battery cell stack (102) and the lower housing (101);
side plates (104), wherein the side plates (104) are fixed on the side surface of the battery cell stack (102);
a flexible circuit board assembly (200), wherein the flexible circuit board assembly (200) comprises: a flexible printed circuit board (201) and an insulating connecting sheet, the flexible printed circuit board (201) is fixedly connected to the battery cell stack (102) through the insulating connecting sheet;
a battery management system (108); and
a connecting assembly (300), wherein the connecting assembly (300) is communicatively connected between the battery management system (108) and the flexible printed circuit board (201), and the connecting assembly (300) is fixedly connected to the side plates (104).

2. The battery pack according to claim 1, wherein the flexible printed circuit board (201) comprises a flexible printed circuit board body (2011), a plurality of sampling sheets (202) are disposed on the flexible printed circuit board body (2011) and distributed along a stacking direction of the pouch battery cells, and one of the sampling sheets (202) is fixedly welded to a tab of corresponding one of the pouch battery cells.

3. The battery pack according to claim 2, wherein the insulating connecting sheet comprises: a plastic sheet (204).

4. The battery pack according to claim 3, wherein the flexible printed circuit board body (2011) is located at the tab side of the battery cell stack (102); the plastic sheet (204) comprises a first fixing surface (2041) and a second fixing surface (2042) connected to each other, the second fixing surface (2042) is fitted and connected to the flexible printed circuit board body (2011), the first fixing surface (2041) is fitted and connected to an upper surface of the battery cell stack (102) to fix the flexible printed circuit board body (2011).

5. The battery pack according to claim 4, wherein the first fixing surface (2041) is provided with a plurality of first openings (2043), the first openings (2043) are located near a connection between the first fixing surface (2041) and the second fixing surface (2042), and corresponds to the sampling sheets (202).

6. The battery pack according to claim 3, wherein the flexible printed circuit board body (2011) is adhesively fixed with the plastic sheet (204), and the plastic sheet (204) is adhesively fixed with the battery cell stack (102).

7. The battery pack according to claim 2, wherein the flexible circuit board assembly (200) further comprises a first connector (203), two ends of the flexible printed circuit board body (2011) are bent in a same direction to form a fixing part (2012) that is stuck on the side plates (104), the first connector (203) is disposed on the fixing part (2012) and is electrically connected to the battery management system (108) through the connecting assembly (300).

8. The battery pack according to claim 2, further comprising a temperature sampling terminal (205) and a fixing plate (207), wherein the temperature sampling terminal (205) is fixedly connected to the battery cell stack (102) through the fixing plate (207).

9. The battery pack according to claim 8, wherein two ends of the fixing plate (207) extend along the stacking direction of the pouch battery cells within the battery cell stack(102), and are fixedly connected to the corresponding one of the side plates (104).

10. The battery pack according to claim 8, wherein the flexible printed circuit board body (2011) is located at the tab side of the battery cell stack (102), and the temperature sampling terminal (205) is located at an upper surface side of the battery cell stack (102); the flexible printed circuit board (201) further comprises a plurality of extending structures (2013), and two ends of the extending structures (2013) are connected to the flexible printed circuit board body (2011) and the temperature sampling terminal (205) respectively.

11. The battery pack according to claim 10, wherein a reinforcement plate (206) is disposed at one end of one of the extending structures (2013) connected to the temperature sampling terminal (205), and the reinforcement plate (206) and the temperature sampling terminal (205) are located on opposite sides of the extending structures (2013), the reinforcement plate (206) faces an upper surface of the battery cell stack (102); the fixing plate (207) is provided with a second opening corresponding to the temperature sampling terminal (205), and the fixing plate (207) is pressed on the extending structures (2013) and/or the reinforcement plate (206) and fits with the upper surface of the battery cell stack (102).

12. The battery pack according to claim 10, wherein two ends of the fixing plate (207) are bent in same direction to form a bent structure (2071), and the bent structure (2071) is fixedly connected with the side plates (104).

13. The battery pack according to claim 1, wherein the connecting assembly (300) comprises: at least one flexible flat cable (301) and an adapter (303), wherein the at least one flexible flat cable (301) is disposed on the side surface of the battery cell stack (102) and is fixedly connected to the side plates (104) through the adapter (303).

14. The battery pack according to claim 13, wherein the at least one flexible flat cable (301) comprises a plurality of flexible flat cables (301), a quantity of the at least one flexible flat cable (301) is equal to a quantity of the flexible printed circuit boards (201), and at least a portion of the plurality of flexible flat cables (301) are disposed in a stacking manner and connected and fixed to the side plate through the same adapter (303).

15. The battery pack according to claim 14, wherein two adjacent layers of the flexible flat cables (301) are fixed to each other by a backside adhesive.

16. The battery pack according to claim 13, wherein the at least one flexible flat cable (301) is disposed corresponding to the side surface of the battery cell stack (102); the adapter (303) comprises a first connecting surface (3031) and a second connecting surface (3032), the first connecting surface (3031) is fixedly connected with the side plates (104), and the second connecting surface (3032) is fixedly connected with the at least one flexible flat cable (301).

17. The battery pack according to claim 16, wherein the first connecting surface (3031) is overlapped on the side plates (104) and fixed on the side plates (104) through a fastener (304); the second connecting surface (3032) is fixed on the at least one flexible flat cable (301) through an adhesive.

18. The battery pack according to claim 14, wherein one end of the at least one flexible flat cable (301) is connected with the corresponding flexible printed circuit board (201), and the other end of the at least one flexible flat cable (301) extends to the battery management system (108), and the plurality of the flexible flat cables (301) are disposed on same path in a stacking manner.

19. The battery pack according to claim 14, wherein the battery pack comprises a first battery cell stack (102) and a second battery cell stack (102), one of tab sides of the first battery cell stack (102) faces one of tab sides of the second battery cell stack (102), the battery management system (108) is located on the other tab side of the first battery cell stack (102) that faces away from the second battery cell stack (102), one end of the at least one flexible flat cables (301) is connected to the corresponding flexible printed circuit board (201), and the other end of the at least one flexible flat cables (301) extends across a side surface of the first battery cell stack (102) and/or a side surface of the second battery cell stack (102) and is electrically connected to the same battery management system (108).

20. The battery pack according to claim 1, wherein the battery cell stack (102) is directly fixedly adhered to a base plate of the lower housing (101) through a thermally conductive structural adhesive.
